# EUROPEAN PATENT APPLICATION

(11) **EP 4 589 467 A1**
(43) Date of publication of application: **23.07.2025**
(21) Application number: 24152923.9
(22) Date of filing: 19.01.2024
(51) Int. Cl.: G06F 40/20, G06F 40/30, G06F 40/40

(54) **COMMUNICATION INFRASTRUCTURE FOR A PLATFORM ECOSYSTEM**

(71) Applicant: Siemens Aktiengesellschaft, 80333 München (DE)
(72) Inventor: Hegazy, Shady, 91052 Erlangen (DE); Elsner, Christoph, 91052 Erlangen (DE)
(74) Representative: Siemens Patent Attorneys

(57) **Abstract**

A communication infrastructure for a platform ecosystem (PE) is provided, wherein the platform ecosystem (PE) includes a plurality of entities (PU1, PU2, PU3, S, DB), in particular services (S), databases (DB) and/or participant units using the services (S) and/or databases (DB). The communication infrastructure comprises a large language model (LLM) providing a natural language communication interface between the plurality of entities (PU1, PU2, PU3, S, DB).

## Description

The present invention relates to a communication infrastructure for a platform ecosystem. Moreover, the invention relates to a method for performing a communication within a platform ecosystem and a computer program product comprising a program code for executing such a method.

In platform ecosystems, several entities have some degree of mutual dependence. The entities may be services (e.g., applications (Apps), application programming interfaces (API), user interfaces (Ul) etc.), participant units ((end) users, developer, etc.) and/or databases, for example. The structure of a platform ecosystem may be an open or closed platform. A stable core (e.g., an operating system or a streaming service) mediates the relationship between a wide range of the services and participant units. The value created in the platform ecosystem by each entity influences the value created by others. Such a platform ecosystem may be for example a streaming platform, a vending platform, a data exchange platform, or any other kind of platform, where different entities share any kind of data.

In this context, it should be noted that, independent of the grammatical term usage, individuals with male, female or other gender identities are included within the term.

As such a platform ecosystem involves different participant units, databases, and services, retrieving and using data from/to those involved parties represents a complex process that requires communication between the participant units, services, and databases. As the different parties use different languages (programming language, natural language, etc.), it is necessary to provide an interface between the different parties in order to use data across different endpoints in the platform ecosystem, or to orchestrate the performance or the state of the platform ecosystem. Until now, an approach for providing an interface was data virtualization which sets up an integration layer that can provide access to data from different sources when requested without the need to relocate or duplicate the data itself. However, this approach only provides data retrieval without the possibility of communication between different languages. Another approach is the use of API-based integrated architecture, where communications between services can be established if the API designs are mutually known, but that adds only limited predefined functionality and does not provide a variable and flexible communication between different languages.

Thus, it is one object of the present invention to provide an adaptive and dynamic way of communication between the different entities of a platform ecosystem.

Accordingly, a communication infrastructure for a platform ecosystem is suggested. As described above, the platform ecosystem includes a plurality of entities, in particular services, databases and/or participant units. The participant units (which may be a maintainer/designer of the platform ecosystem, an orchestrator of the platform ecosystem or any other kind of user of the platform ecosystem) may use the services and/or databases. Using in this context may refer to a simple access and retrieval of data to/from the databases or services but may also refer to complex queries or tasks issued by the participant units and being answered or performed by the services and/or databases. Further, the services may also access the databases for answering or performing the queries or tasks issued by the participant units.

The respective entity, e.g., a participant unit or service, may be implemented in hardware and/or in software. If said entity is implemented in hardware, it may be embodied as a device, e.g., as a computer or as a processor or as a part of a system, e.g., a computer system. If said entity is implemented in software, it may be embodied as a computer program product, as a function, as a routine, as a program code or as an executable object.

The platform ecosystem may be a streaming or vending platform or may be any other kind of platform involving different kind of entities which communicate with each other and share information or data.

A service in this context may be for example an application, an application programming interface, or a user interface. A database in this context may be any kind of database being included in the platform ecosystem and being able to store data of the different entities of the platform ecosystem or any other data originating from the operation of the platform ecosystem.

In order to provide a dynamic and variable communication interface between the different entities, the communication infrastructure comprises a large language model. The large language model (LLM) provides a natural language communication interface between the different entities of the platform ecosystem. A large language model is an artificial neural network and provides the ability to achieve general-purpose language understanding and generation. Large language models acquire these abilities by training the models, for example by learning statistical relationships from text documents during a computationally training process. In this case, the large language model is trained to provide a communication interface between the different entities which most likely use different languages. For example, the participant units may use natural language, wherein the services and/or databases may use (different) programming languages. The large language model may provide thus not only a communication interface between the participant units on the one hand and the services and/or databases on the other hand, i.e., between natural language and programming language, but may also provide a communication interface between different programming languages.

In any case, the large language model provides a communication interface which is able to provide communication between different kinds of entities using different kind of languages. The large language model may be trained at the start of the operation of the platform ecosystem and may be re-trained and/or fine-tuned by further training during the operation of the platform ecosystem. Thus, the large language model provides a dynamic and flexible communication interface which may be adapted to the current existing entities of the platform ecosystem. This was not possible with previous approaches which used static interfaces. Such static interfaces are not able to adapt to different kind of languages and entities but needed to be specifically programmed for each entity or combination of entities.

According to an embodiment, the large language model comprises a plurality of agent units each being configured to perform a communication interaction between at least two entities. Each agent unit may be an instance of an interaction session between at least two entities. Thus, when a first entity starts a communication session with a second entity, an agent unit is started representing an instance of the interaction session between the first and the second entity. When the interaction session is ended, the agent unit may also be ended. One interaction session may also include more than one instance, in which case more than one agent unit is involved in this interaction session. By using several agent units, the tasks being performed by the large language model may be divided into several instances, providing a more flexible and faster processing of the tasks.

According to a further embodiment, the agent units are configured to receive a task and/or prompt from an entity and are configured to initiate an interaction session between the corresponding entity and a further entity for executing the task and/or prompt. Such a task or prompt may cause the agent unit to communicate with one or more further entities to retrieve data and/or information which are required to finish the task or prompt. In particular, the agent unit may communicate with further entities which are needed for the respective task or prompt, for example data bases in which data or information is stored being needed for the task or prompt, or services which provide functionality or information being needed for the task or prompt.

According to a further embodiment, the large language model is configured to constantly adjust the agent units and/or add new agent units based on entities of the platform ecosystem. When new entities are added or the current entities are changed, the large language model may dynamically adapt to such changes. Adding new agent units and/or adjusting existing agent units may be implemented by training the large language model based on the new or changed entities.

According to a further embodiment, the entities include a plurality of services. Each of the plurality of services comprises a grammar interference layer component for providing a natural language interface between the large language model and the services. In addition to the large language model providing a natural language interface, each service may comprise a further interface, i.e., the grammar inference layer component, which is particularly adapted for the respective service. For example, each grammar interference layer component may be configured to infer the grammar of the respective service, in particular by utilizing a multimodal grammar inference algorithm analyzing patterns, syntax and/or semantics of endpoints of the service and/or data schemas associated with the service. Thus, the grammar inference layer component may provide an individual interface for each service, adapted to the specific language of the service, which can then communicate with the more general communication interface being provided by the large language model.

According to a further embodiment, the grammar interference layer component is configured to constantly adapt to new parameters of the service. Thus, when the service performs any changes of its parameters, leading probably to changed syntax or semantics of the service, the grammar inference layer component may adapt to these changes, thus providing a very dynamic communication interface.

Like the large language model, the grammar inference layer component may be implemented as machine learning algorithm or neural network and may accordingly be trained using the information and/or parameters of the respective service. As each service is equipped with a corresponding grammar inference layer component, these components may be specifically adapted to the corresponding service and may thus provide a reliable communication interface.

According to a further aspect, a method for performing a communication within a platform ecosystem is suggested, wherein the platform ecosystem includes a plurality of entities, in particular services, databases and/or participant units using the services and/or databases. The method comprises the step of providing a natural language communication interface between the entities based on a large language model.

As already described above, the method provides the advantage of a dynamic and intuitive interface between different entities of the platform ecosystem. In particular, participant units using natural language may easily communicate or interact with other entities like services or databases which use any kind of programming language.

According to a further embodiment, the large language model comprises a plurality of agent units and each agent unit performs a communication interaction between at least two entities. The agent units may represent sub-units of the large language model, for example sub-units of a neural network embodying the large language model.

According to a further embodiment, the agent units receive a task and/or prompt from an entity and initiate an interaction session between the corresponding entity and a further entity for executing the task and/or prompt. For each task and/or prompt, a separate agent unit may be responsible, thereby dividing the tasks to different sub-units which are only responsible for this specific task.

According to a further embodiment, the large language model constantly adjusts the agent units and/or adds new agent units based on entities of the platform ecosystem. Thus, the large language model performs a dynamic adaption to a changing environment and provides thus a flexible interface for different entities.

According to a further embodiment, the entities include a plurality of services, wherein each of the plurality of services comprises a grammar inference layer component which provides a natural language interface between the large language model and the services and wherein each grammar inference layer component infers the grammar of the respective service by utilizing a multimodal grammar inference algorithm analyzing patterns, syntax and/or semantics of endpoints of the service and/or data schemas associated with the service.

As also described above, the grammar inference layer components provide an interface for each service. As the grammar inference layer components are adapted to the corresponding service, they may enhance the performance of the communication interface being provided by the large language model.

Further, the grammar inference layer component may constantly adapt to new parameters of the service. Thus, these components also provide a dynamic and adjustable communication interface.

Based on the above-described infrastructure and method, an adaptive and dynamic communication interface between different entities is provided, instead of previous solutions, which were not adaptive and dynamic enough to handle the variation and the portability required in such ecosystems.

The described infrastructure and method provide a way for an intelligent multimodal communication in platform ecosystems which adds explorative, confirmative, and generative capabilities to ecosystem entities, like orchestrators, designers, maintainers, and users. The infrastructure and method provide a smart, adaptive, and dynamic way for managing, orchestrating, and making use of data within platform ecosystems for all participating entities. Particularly based on the combination of intelligent large language models, along with multimodal grammar inference algorithms and models, evolvable and dynamic ways to communicate and orchestrate within platform ecosystems are provided in order to generate more value out of the available data points and services (for example APIs).

The embodiments and features described with reference to the infrastructure of the present invention apply mutatis mutandis to the method of the present invention.

According to a further aspect, the invention relates to a computer program product comprising a program code for executing the above-described method for performing a communication within a platform ecosystem when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawing, in which:

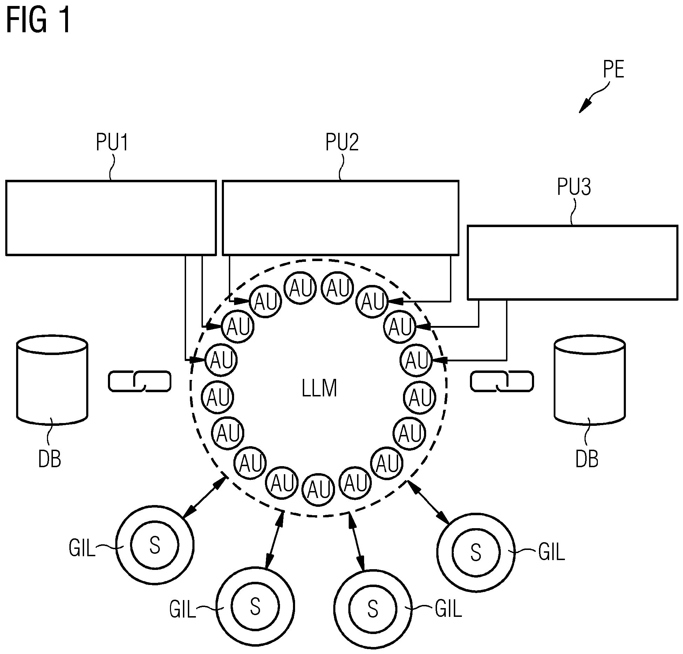

Fig. 1 shows a schematic diagram of a platform ecosystem having a communication infrastructure.

In the Figure, like reference numerals designate like or functionally equivalent elements, unless otherwise indicated.

Fig. 1 shows a platform ecosystem PE. The platform ecosystem PE comprises a plurality of entities, in this case participant units PU1, PU2, PU3, databases DB and services S.

The platform ecosystem PE may be for example a streaming or vending platform. The participant units PU1, PU2, PU3 may be users like technical users such as maintainers or designers (PU1), managing users such as orchestrators (PU2) and/or end users (PU3). The services S may be any kind of service or application programming interface (API) of the platform PE.

For example, when an end user PU3 wants to build an electric car, the end user PU3 may ask the platform PE which components are needed. To answer this question, accessing a service S of the platform PE may be required. The end user PU3 will probably ask in natural language which components are needed. However, the services S will not understand natural language and will only have their respective programming language. Thus, a communication interface is needed between the different entities PU1, PU2, PU3, S, DB.

In previous solutions, static communication interfaces between a specific service S and the participant units PU1, PU2, PU3 were used. However, for each service S, a separate, specific interface was needed and programmed, which is a very static interface being not able to adjust to different services or changing services.

Thus, in the here described platform ecosystem PE, a dynamic and adjustable communication infrastructure is used. The communication infrastructure comprises a large language model LLM. The large language model LLM is preferably implemented as neural network, which may be trained based on the current entities PU1, PU2, PU3, S, DB. Furthermore, the large language model LLM may be re-trained when the environment of the platform ecosystem PE, e.g., the participating entities, change.

Thus, the large language model LLM is built and fine-tuned for data in the context of the platform ecosystem PE. As can be seen in Fig. 1, the large language model LLM has access to the data bases DB. Preferably, the large language model LLM may have access to a real-time vectorized version of relevant ecosystem data, such as requests logs data, users/actors/artifacts data, and other data originating from the operation of the platform ecosystem PE.

For example for performance reasons, the large language model LLM may comprise several sub-units, so called agent units AU, which correspond to instances of interaction sessions between participant units PU1, PU2, PU3 and services S.

The agent units AU may receive tasks and/or prompts from the participant units PU1, PU2, PU3 and interact with services S, e.g., APIs, to execute/respond the tasks and/or prompts. In the above-mentioned example, an agent unit AU may interact with a service S for answering to the participant unit PU3, which components are needed for building an electric car.

As can be seen in Fig. 1, a participant unit PU1, PU2, PU3 may communicate with more than one agent unit AU. When a participant unit PU1, PU2, PU3 issues more than one task or prompt, several agent units AU may be utilized for responding to these tasks and/or prompts.

The agent units AU are also able to answer complex questions of the participant units PU1, PU2, PU3 which may require communication with several services S and/or data bases DB.

As the large language model LLM provides a natural language communication interface, being adjustable based on the current structure of the platform ecosystem PE, a dynamic communication interface between the different entities PU1, PU2, PU3, S, DB of the platform ecosystem PE is provided.

This interface may be enhanced by equipping the services S with a grammar inference layer component GIL. Each individual service S within the platform ecosystem PE is equipped with its own grammar inference layer component GIL.

The grammar inference layer component GIL may utilize multimodal grammar inference algorithms to analyze patterns, syntax, and semantics of API endpoints and data schemas associated with the service S to infer its grammar. As each grammar inference layer component GIL is adapted to the corresponding service S, this component GIL may provide a very specific communication interface being able to exactly translate the language of the large language model LLM into the language of the corresponding service S and vice versa.

Based on the combination of large language model LLM and the grammar inference layer components GIL, a reliable and detailed communication interface between the entities PU1, PU2, PU3, S, DB of the platform ecosystem PE is provided which is able to dynamically adapt to different combinations of interacting entities PU1, PU2, PU3, S, DB.

Further, the grammar inference layer components GIL may adapt to new API endpoints and parameters, thus contributing to the dynamic and adaptive behavior of the communication infrastructure.

The above-described communication infrastructure provides complex and advanced explorative, confirmative, and generative capabilities for the platform ecosystem PE as services S are accessible through natural language queries without having to build specific Uls, APIs, models, and components for each specific service. For example, retrieval of certain data and searching for certain information based on certain patterns, performing causal inference via experiments using the services S controlled by the agent units AU, building new artifacts (stored in the data bases DB) by picking and reusing certain artifacts on the platform ecosystem PE, recommending certain strategies or designs based on analysis of certain metrics, generating adaptive architectural changes to improve certain metrics, generating documentation, guides, and tutorials on-the-fly for certain topics or tasks that the user needs to learn about, is simplified.

Further, as also described above, the communication infrastructure can adapt to changes both in context and design of the platform ecosystem components. For example, grammar inference layer components GIL may adapt to changes in APIs grammar, the large language model LLM may be continuously fine-tuned and improved to excel platform-specific tasks, etc.

Although the present invention has been described in accordance with preferred embodiments, it is obvious for the person skilled in the art that modifications are possible in all embodiments.

## Claims

1. A communication infrastructure for a platform ecosystem (PE), wherein the platform ecosystem (PE) includes a plurality of entities (PU1, PU2, PU3, S, DB), in particular services (S), databases (DB) and/or participant units using the services (S) and/or databases (DB), and
wherein the communication infrastructure comprises a large language model (LLM) providing a natural language communication interface between the plurality of entities (PU1, PU2, PU3, S, DB).

2. The communication infrastructure according to claim 1, wherein the large language model (LLM) comprises a plurality of agent units (AU) each being configured to perform a communication interaction between at least two entities (PU1, PU2, PU3, S, DB).

3. The communication infrastructure according to claim 2, wherein each agent unit (AU) is an instance of an interaction session between at least two entities (PU1, PU2, PU3, S, DB).

4. The communication infrastructure according to claim 3, wherein the agent units (AU) are configured to receive a task and/or prompt from an entity (PU1, PU2, PU3, S, DB) and to initiate an interaction session between the corresponding entity (PU1, PU2, PU3, S, DB) and a further entity (PU1, PU2, PU3, S, DB) for executing the task and/or prompt.

5. The communication infrastructure according to any one of the claims 2 to 4, wherein the large language model (LLM) is configured to constantly adjust the agent units (AU) and/or add new agent units (AU) based on entities (PU1, PU2, PU3, S, DB) of the platform ecosystem (PE).

6. The communication infrastructure according to any one of the preceding claims, wherein the entities (PU1, PU2, PU3, S, DB) include a plurality of services (S) and wherein each of the plurality of services (S) comprises a grammar inference layer component (GIL) for providing a natural language interface between the large language model (LLM) and the services (S).

7. The communication infrastructure according to claim 6, wherein each grammar inference layer component (GIL) is configured to infer the grammar of the respective service (S) by utilizing a multimodal grammar inference algorithm, particularly analyzing patterns, syntax and/or semantics of endpoints of the service (S) and/or data schemas associated with the service (S).

8. The communication infrastructure according to claim 7, wherein the grammar inference layer component (GIL) is configured to constantly adapt to new parameters of the service (S).

9. A method for performing a communication within a platform ecosystem (PE), wherein the platform ecosystem (PE) includes a plurality of entities (PU1, PU2, PU3, S, DB), in particular services (S), databases (DB) and/or participant units using the services (S) and/or databases (DB), and
wherein the method comprises providing a natural language communication interface between the entities (PU1, PU2, PU3, S, DB) based on a large language model (LLM).

10. The method according to claim 9, wherein the large language model (LLM) comprises a plurality of agent units (AU) and wherein each agent unit (AU) performs a communication interaction between at least two entities (PU1, PU2, PU3, S, DB).

11. The method according to claim 10, wherein the agent units (AU) receive a task and/or prompt from an entity (PU1, PU2, PU3, S, DB) and initiate an interaction session between the corresponding entity (PU1, PU2, PU3, S, DB) and a further entity (PU1, PU2, PU3, S, DB) for executing the task and/or prompt.

12. The method according to claim 10 or 11, wherein the large language model (LLM) constantly adjusts the agent units (AU) and/or adds new agent units (AU) based on entities (PU1, PU2, PU3, S, DB) of the platform ecosystem (PE).

13. The method according to any one of the claims 9 to 12, wherein the entities (PU 1, PU2, PU3, S, DB) include a plurality of services (S), wherein each of the plurality of services (S) comprises a grammar inference layer component (GIL) which provides a natural language interface between the large language model (LLM) and the services (S) and wherein each grammar inference layer component (GIL) infers the grammar of the respective service (S) by utilizing a multimodal grammar inference algorithm, particularly analyzing patterns, syntax and/or semantics of endpoints of the service (S) and/or data schemas associated with the service (S).

14. The method according to claim 13, wherein the grammar inference layer component (GIL) constantly adapts to new parameters of the service (S).

15. A computer program product comprising a program code for executing the method for performing a communication within a platform ecosystem (PE) according to any one of the claims 9-14.
